Europäisches Patentamt

European Patent Office

Office européen des brevets

(11) Numéro de publication: **0 268 828 B1**

## FASCICULE DE BREVET EUROPEEN

(45) Date de publication de fascicule du brevet:
24.07.91

(51) Int. Cl.⁵: **H01M 6/34**, H01M 2/40

(21) Numéro de dépôt: **87115422.5**

(22) Date de dépôt: **21.10.87**

(54) **Pile amorcable.**

(30) Priorité: **23.10.86 FR 8614712**

(43) Date de publication de la demande:
**01.06.88 Bulletin 88/22**

(45) Mention de la délivrance du brevet:
**24.07.91 Bulletin 91/30**

(84) Etats contractants désignés:
**DE FR GB IT**

(56) Documents cités:
**FR-A- 2 161 040**
**US-A- 3 463 671**
**US-A- 3 953 239**

**PATENT ABSTRACTS OF JAPAN, vol. 6, no. 247 (E-146)[1125], 7 décembre 1982; & JP-A-57 147 875 (NIHON DENCHI K.K.) 11-09-1982**

**PATENT ABSTRACTS OF JAPAN, vol. 9, no. 89 (E-309)[1812], 18 avril 1985; & JP-A-59 219 862 (NIHON DENCHI K.K.) 11-12-1984**

(73) Titulaire: **Société Anonyme dite SAFT
156, avenue de Metz
F-93230 Romainville(FR)**

(72) Inventeur: **Leben, Yannick
10 rue Albert Laurenson
F-93000 Bobigny(FR)**
Inventeur: **D'Ussel, Louis
64 rue de Saussure
F-75017 Paris(FR)**

(74) Mandataire: **Weinmiller, Jürgen et al
Lennéstrasse 9 Postfach 24
W-8133 Feldafing(DE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne une pile amorçable à l'eau ou à l'eau de mer, mettant en oeuvre notamment le couple électrochimique AgO/Al. Une pile de ce genre s'applique en particulier à la propulsion des véhicules sous-marins.

Schématiquement une telle pile comprend :

- un bloc électrochimique mettant en oeuvre des couples AgO/Al et présentant une entrée et une sortie pour un circuit de distribution d'électrolyte à base de soude,
- ledit circuit de distribution d'électrolyte comportant une entrée pour l'eau de mer, une pompe pour la circulation de l'électrolyte, un réservoir d'électrolyte en solution dont une première sortie est reliée directement à une première entrée d'une vanne thermostatique et dont une seconde sortie est reliée par l'intermédiaire d'un échangeur thermique à une seconde entrée de ladite vanne thermostatique dont la sortie est reliée à l'entrée dudit bloc électrochimique.

Au moment de l'amorçage une vanne s'ouvre pour faire entrer de l'eau de mer dans le réservoir d'électrolyte qui contient de la soude solide, et le circuit de distribution d'électrolyte est amorcé.

Au cours de la décharge, il se forme des aluminates dans l'électrolyte et leur concentration est telle qu'elle parvient à limiter la durée de la décharge de la pile ; elle est en effet directement proportionnelle à la capacité restituée.

Pour éviter cette limitation de capacité, il peut être envisagé d'augmenter le volume d'électrolyte, mais c'est impossible dans la plupart des applications concernées à cause de la masse et de l'encombrement supplémentaires qui en résultent.

La présente invention a pour but de résoudre le problème de l'élimination des aluminates de manière simple en évitant les inconvénients précités.

La présente invention a pour objet une pile amorçable à l'eau de mer comprenant :

- un bloc électrochimique mettant en oeuvre des couples AgO/Al et présentant une entrée et une sortie pour un circuit de distribution d'électrolyte à base de soude,
- ledit circuit de distribution d'électrolyte comportant une entrée pour l'eau de mer, une pompe pour la circulation de l'électrolyte, un réservoir d'électrolyte en solution dont une première sortie est reliée directement à une première entrée d'une vanne thermostatique et dont une seconde sortie est reliée par l'intermédiaire d'un échangeur thermique à une seconde entrée de ladite vanne thermostatique dont la sortie est reliée à l'entrée dudit bloc électrochimique,

caractérisée par le fait que ledit circuit de distribution d'électrolyte comporte :

- une évacuation d'électrolyte chaud chargé d'aluminates pilotée par une vanne commandée en fonction d'un paramètre variant comme la vitesse de génération de ces aluminates,
- des moyens pour régénérer l'électrolyte comportant un bloc de soude solide disposé dans l'électrolyte refroidi au voisinage de la sortie dudit échangeur thermique.

Selon une première variante de mise en oeuvre très avantageuse, ledit paramètre est la température de l'électrolyte et ladite vanne commandée est constituée par ladite vanne thermostatique elle-même.

Selon une autre variante, ladite vanne est commandée à partir d'une sonde mesurant la température de l'électrolyte à la sortie dudit bloc électrochimique.

Selon une autre variante, ladite vanne est commandée par des sondes de température mesurant les températures de l'électrolyte à l'entrée et à la sortie dudit bloc électrochimique.

Selon une autre variante, ladite vanne est commandée à partir d'un organe de mesure de l'intensité du courant de la pile.

D'autres caractéristiques et avantages de la présente invention apparaîtront au cours de la description suivante de modes de réalisation donnés à titre illustratif mais nullement limitatif.

Dans le dessin annexé :

- La figure 1 est un schéma du bloc électrochimique avec son circuit de distribution d'électrolyte.
- La figure 2 est un schéma de la vanne thermostatique entrant dans le circuit de distribution de la figure 1.
- La figure 3 est un schéma de fonctionnement du dispositif des figures 1 et 2.
- la figure 4 montre des courbes de décharge d'une pile de l'art antérieur et d'une pile possédant un circuit de distribution selon les figures précédentes.
- La figure 5 est un schéma d'une autre variante de circuit de distribution.

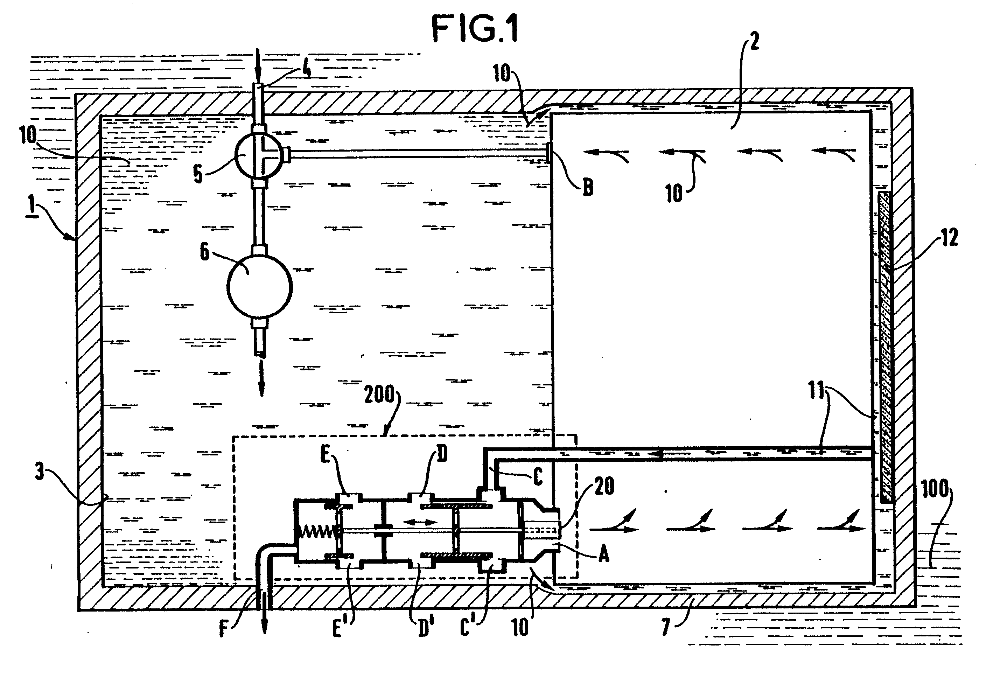

On a illustré très schématiquement dans la figure 1 une pile amorçable disposée dans la coque 1 d'un véhicule immergé dans l'eau de mer 100. Elle comporte des organes d'amorçage qui ne font pas l'objet de la présente demande, un bloc électrochimique 2 constitué de couples AgO/Al, et un circuit de distribution pour l'électrolyte 10, cet électrolyte entrant par l'orifice A dans le bloc et en sortant par l'orifice B.

Le circuit de distribution comporte un réservoir 3, une pompe 6, reliée à une arrivée d'eau de mer 4 par une vanne 5.

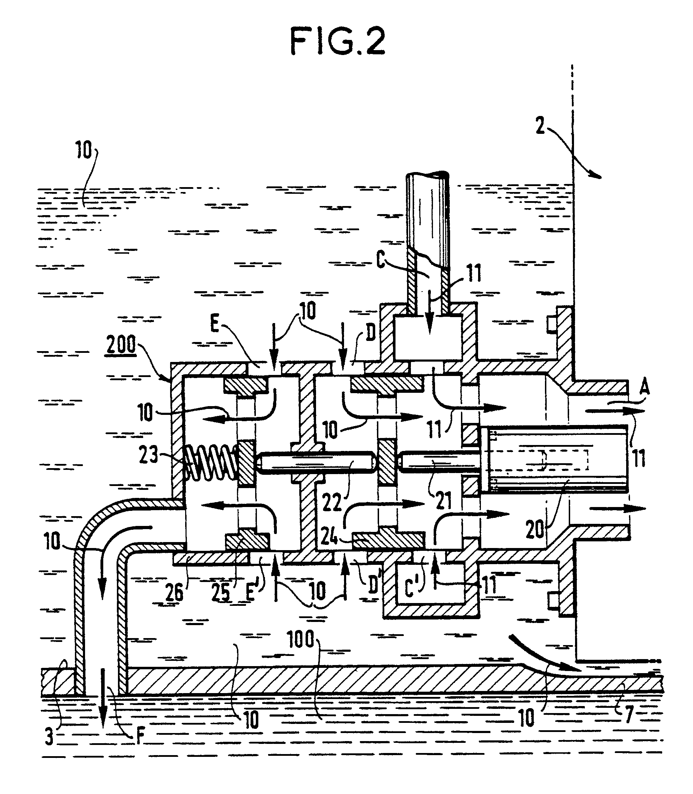

L'ensemble constitué par le bloc électrochimique 2 et le circuit de distribution d'électrolyte est entouré d'un échangeur thermique 7 indispensable, car, au cours de la décharge, on constate un échauffement de l'électrolyte 10 jusqu'à une température pouvant atteindre 89°C. L'électrolyte chaud 10 circule entre le bloc électrochimique 2 et la coque 1 de manière à être refroidi par l'eau de mer ; l'électrolyte 11 refroidi sortant de l'échangeur thermique 7 par l'orifice C, peut être réinjecté à l'entrée A du bloc électrochimique grâce à une vanne thermostatique 200 que l'on voit en détail dans la figure 2.

On trouve dans cette figure des entrées E, E', D, D' de la vanne thermostatique 200 pour l'électrolyte chaud 10, et des entrées C et C' d'électrolyte 11 refroidi issu de l'échangeur thermique 7. La vanne thermostatique 200 est munie d'une capsule thermostatique 20 et d'une tige 21 mobile en fonction de la température et coopérant par l'intermédiaire d'une entretoise 22 et d'un ressort de rappel 23 avec deux pistons 24 et 25 logés dans un corps 26. Le piston 24 est susceptible d'obturer plus ou moins les entrées D, D', C et C', tandis que le piston 25 est susceptible d'obturer plus ou moins les entrées E et E' et par conséquent de réguler la sortie d'électrolyte 10 en F vers la mer 100.

Selon la présente invention, on dispose dans l'échangeur thermique, au voisinage de l'endroit où sort l'électrolyte refroidi 11 un bloc de soude fondue 12.

A titre d'exemple :
- la quantité d'électrolyte dans tout le circuit de distribution est de cinq litres.
- Sa concentration est égale à 8N environ.
- Le débit de l'électrolyte est 1,33m3/heure.
- La durée de décharge est de huit minutes.
- La puissance est de l'ordre de 20 Kwatts.
- La course de la tige mobile 21 est prévue pour un intervalle de température compris entre 81°C et 89°C.
- L'échangeur thermique doit être tel que la température de l'électrolyte entrant dans la pile en A soit maintenue vers 81°C.
- La masse du bloc de soude fondue 12 est au moins égale à 0,8 kg.

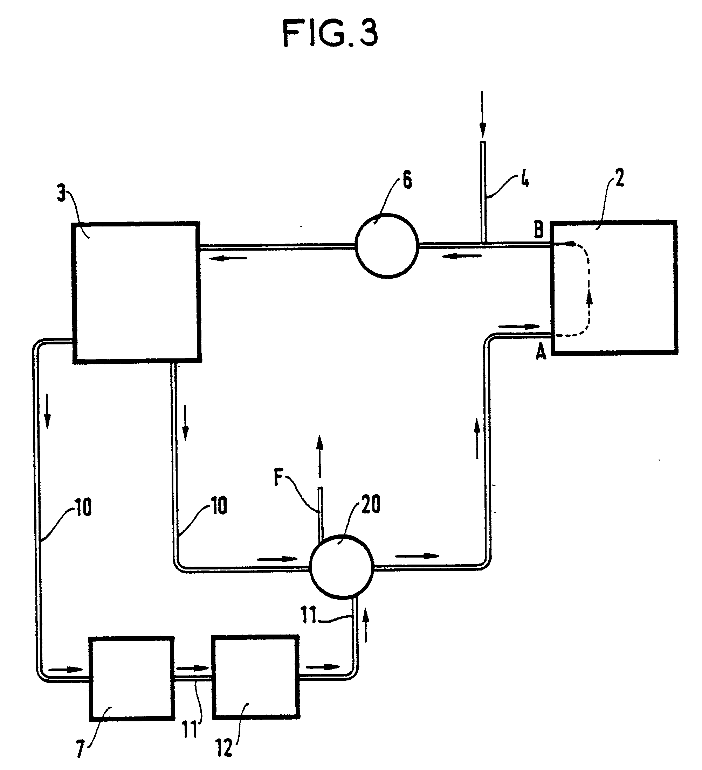

Le fonctionnement du dispositif selon l'invention apparaît clairement sur le schéma de la figure 3 complétant les figures 1 et 2.

Après l'amorçage, pendant la phase de démarrage,la concentration en aluminates de l'électrolyte 10 est faible, sa température n'atteint pas la valeur de 81°C, la tige 21 de la capsule thermostatique 20 n'est pas sortie. Par conséquent, les orifices C et C' sont fermés, les orifices D et D' sont ouverts et les orifices E et E' sont fermés : l'électrolyte 10 est totalement réintroduit dans le bloc électrochimique 2, il n'y a aucune fuite d'électrolyte 10 vers la mer en F, il n'y a pas d'apport supplémentaire de soude issu du bloc 12 et la concentration de la solution de soude reste acceptable.

Dans la suite de la décharge, une forte puissance électrique est demandée, la température de l'électrolyte 10 augmente, ainsi que la concentration en aluminates. A ce moment, au niveau de la vanne thermostatique 200, la tige 21 sort de plus en plus, ce qui entraîne les déplacements des pistons 24 et 25. Par conséquent, un débit de plus en plus important d'électrolyte 11 refroidi dissout de la soude au niveau du bloc 12 et entre dans le bloc 2 par l'orifice A. Un débit d'électrolyte chaud 10 proportionnel à celui passant dans l'échangeur 7 est rejeté an F vers la mer 100 pour éliminer des aluminates. La quantité d'eau manquante dans le circuit de distribution d'électrolyte est automatiquement compensée par l'introduction d'eau de mer au niveau de l'entrée 4.

Ainsi, plus l'électrolyte 10 a besoin d'être refroidi, plus le débit de fuite vers la mer et le débit dans l'échangeur thermique sont importants, ce qui favorise la régénération de la solution de soude, et inversement. La masse du bloc de soude 12 a été choisie de manière que la concentration de l'électrolyte en aluminates ne dépasse jamais une valeur critique qui, dans l'exemple choisi est 3 moles/litres. Si les conditions opératoires sont différentes (intensité du courant, température de fonctionnement...) cette valeur critique varie entre 2,5 moles par litre et 3,5 moles par litre.

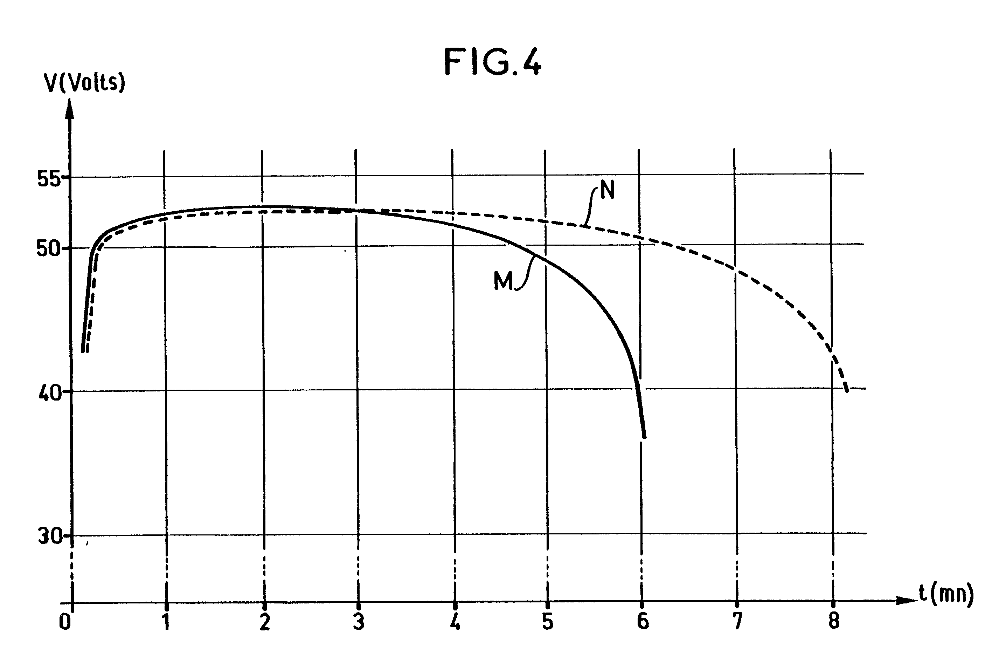

On a représenté dans la figure 4 la variation de la tension V (en volts) en fonction du temps t (en minutes) d' une pile de l'art antérieur (courbe M) et d'une pile selon l'invention (courbe N). On voit très clairement l'intérêt présenté par la disposition selon l'invention au cours des trois dernières minutes de décharge. On observe un gain de 35 % sur la durée de décharge à puissance constante.

Dans l'exemple qui vient d'être décrit, le paramètre utilisé pour piloter le processus d'évacuation vers la mer en F, et d'admission d'eau de mer en 4 qui la compense, est la température de l'électrolyte ; ce paramètre lié à la vitesse de génération des aluminates agit directement sur la capsule thermostatique 20.

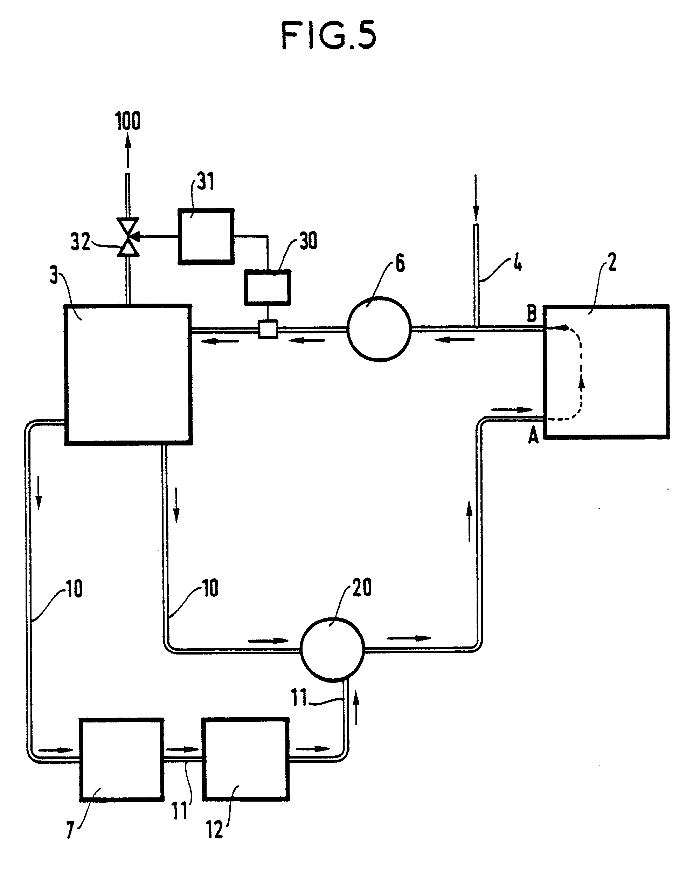

Dans la variante qui va être explicitée ci-dessous à l'aide du schéma de la figure 5, la vanne thermostatique 200 n'assure pas cette fonction et le piston 25 est supprimé. Elle continue d'assurer le mélange des électrolytes 10 et 11 en fonction de la température de l'électrolyte 10. On prévoit en outre une sonde 30 pour mesurer la température de l'électrolyte 10 à la sortie B du bloc électrochimique 2; cette sonde est reliée à un calculateur 31 qui commande une vanne 32 évacuant la quantité adéquate d'électrolyte 10 vers la mer, une quantité égale d'eau de mer entrant alors immédiatement au niveau de l'orifice 4.

Selon une autre variante, on peut utiliser pour commander la vanne 32 le paramètre constitué par la différence entre les températures de l'électrolyte en B et en A qui est également proportionnelle à la vitesse de génération des aluminates ; un autre paramètre peut être l'intensité du courant délivré par la pile qui peut être mesurée aisément, ou la capacité électrique restituée par cette pile.

Ces dernières variantes ne sont pas illustrées car elles découlent facilement du schéma de la figure 5.

Bien entendu l'invention n'est pas limitée aux modes de réalisation précités. On pourra, sans sortir du cadre de l'invention remplacer tout moyen par un moyen équivalent.

**Revendications**

1. Pile amorçable à l'eau de mer comprenant :
   - un bloc électrochimique (2) mettant en oeuvre des couples AgO/Al et présentant une entrée et une sortie pour un circuit de distribution d'électrolyte à base de soude,
   - ledit circuit de distribution d'électrolyte comportant une entrée (4) pour l'eau de mer, une pompe (6) pour la circulation de l'électrolyte, un réservoir d'électrolyte en solution dont une première sortie est reliée directement à une première entrée d'une vanne thermostatique (200) et dont une seconde sortie est reliée par l'intermédiaire d'un échangeur thermique (7) à une seconde entrée de ladite vanne thermostatique dont la sortie est reliée à l'entrée dudit bloc électrochimique,
   caractérisé par le fait que ledit circuit de distribution d'électrolyte comporte :
   - une évacuation d'électrolyte chaud (10) chargé d'aluminates pilotée par une vanne commandée en fonction d'un paramètre variant comme la vitesse de génération de ces aluminates,
   - des moyens pour régénérer l'électrolyte comportant un bloc de soude solide disposé dans l'électrolyte froid (11)au voisinage de la sortie dudit échangeur thermique (7).

2. Pile amorçable selon la revendication 1, caractérisée par le fait que ledit paramètre est la température de l'électrolyte (10) à la sortie dudit bloc électrochimique et que ladite vanne commandée en fonction de ce paramètre est ladite vanne thermostatique (200) elle-même.

3. Pile amorçable selon la revendication 1, caractérisée par le fait que ledit paramètre étant choisi parmi la température de l'électrolyte (10) à la sortie dudit bloc électrochimique, la différence des températures de l'électrolyte à la sortie et à l'entrée dudit bloc électrochimique (2), l'intensité du courant de ladite pile, la capacité de ladite pile, elle comporte un organe de mesure de ce paramètre relié à un calculateur qui commande ladite vanne pour l'évacuation d'électrolyte.

4. Pile amorçable selon l'une des revendications précédentes, caractérisée par le fait que la masse de soude dudit bloc de soude solide (12) est telle que la concentration en aluminates de entre 2,5 moles par litre et 3,5 moles par litre.

**Claims**

1. A battery activatable by seawater, comprising:
   - an electrochemical block (2) implementing AgO/Al couples and having an inlet and an outlet for a distribution circuit for distributing a sodium hydroxide-based electrolyte,
   - said electrolyte distribution comprising an inlet (4) for seawater, a pump (6) for pumping the electrolyte, a tank for electrolyte in solution, whose first outlet is directly connected to a first inlet of a thermostatic valve (200), and whose second outlet is connected via a heat exchanger (7) to a second inlet of the thermostatic valve whose outlet is connected to the inlet of said electrochemical block,
   characterized in that the electrolyte distribution circuit comprises:
   - an exhaust for hot electrolyte (10) containing aluminates, said exhaust being controlled by a valve which is adjusted in accordance with a parameter that varies with the rate of aluminate generation, and
   - means for regenerating the electrolyte, said means comprising a block of solid sodium hydroxide disposed in the cold electrolyte (11) in the vicinity of the outlet from said heat exchanger (7).

2. An activatable battery according to claim 1, characterized in that said parameter is the temperature of the electrolyte (10) and in that said valve which is adjusted in accordance with said parameter is constituted by said thermostatic valve (200) itself.

3. An activatable battery according to claim 1, characterized in that, said parameter being selected from the temperature of the electrolyte (10) at the outlet from said electrochemical block, from the difference in temperature between the electrolyte at the outlet and the electrolyte at the inlet of said electrochemical block (2), from the intensity of the current delivered by said battery, and from the capacity of said battery, said battery includes a member for measuring said parameter, said member being connected to computing means for adjusting said valve for exhausting the electrolyte.

4. An activatable battery according to any one of the preceding claims, characterized in that the mass of solid sodium hydroxide of said block (12) is such that the concentration of aluminates in the electrolyte alwqys remains below a critical value lying in the range 2.5 moles per liter to 3.5 moles per liter.

## Patentansprüche

1. Mit Meerwasser aktivierbare Batterie, mit:
   - einem elektrochemischen Block (2) aus AgO/Al-Reaktionspaaren, der einen Einlaß und einen Auslaß zu einem Verteilerkreis für Elektrolyten auf der Basis von Natriumhydroxid besitzt,
   - wobei der Elektrolytverteilerkreis einen Einlaß (4) für das Meerwasser, eine Pumpe (6) zum Umwälzen des Elektrolyten, ein Reservoir für den gelösten Elektrolyten aufweist, dessen erster Auslaß direkt mit einem ersten Einlaß eines Thermostatventils (200) und dessen zweiter Auslaß über einen Warmetauscher (7) mit einem zweiten Einlaß des Thermostatventils verbunden ist, wobei der Auslaß des Ventils mit einem Einlaß des elektrochemischen Blocks verbunden ist,
   dadurch gekennzeichnet, daß der Elektrolytverteilerkreis weiter aufweist:
   - ein Ablassen des heißen mit Aluminaten belasteten Elektrolyten (10), das durch ein Ventil gesteuert wird, das in Abhängigkeit von einem Parameter geregelt wird, der sich mit der Erzeugungsgeschwindigkeit dieser Aluminate ändert, und
   - Mittel zur Regenerierung des Elektrolyten, mit einem Block aus festem Natriumhydroxid, der im kalten Elektrolyten (11) in der Nähe des Auslasses des Wärmetauschers (7) angeordnet ist.

2. Aktivierbare Batterie nach Anspruch 1, dadurch gekennzeichnet, daß die Temperatur des Elektrolyten (10) am Auslaß des elektrochemischen Block der erwähnte Parameter ist und daß das in Abhängigkeit von diesem Parameter geregelte Ventil das Thermostatventil (200) selber ist.

3. Aktivierbare Batterie nach Anspruch 1, dadurch gekennzeichnet, daß der Parameter aus der Temperatur des Elektrolyten (10) am Auslaß des elektrochemischen Blocks, der Differenz der Elektrolyttemperaturen am Auslaß und am Einlaß des elektrochemischen Blocks (2), der Stromstärke der Batterie und der Kapazität der Batterie ausgewählt wird, und daß die Batterie ein Organ zur Messung dieses Parameters aufweist, das an einen Rechner angeschlossen ist, der das Ventil zum Ablassen des Elektrolyten steuert.

4. Aktivierbare Batterie nach einem der vorhergehenden Ansprüche, dadurch gekennzeichnet, daß die Natriumhydroxidmasse des festen Natriumhydroxidblocks (12) so bemessen ist, daß die Aluminatkonzentration des Elektrolyten stets unter einem kritischen Wert zwischen 2,5 Mol je Liter und 3,5 Mol je Liter liegt.

FIG.1

# FIG.2

# FIG.3

# FIG.4

EP 0 268 828 B1

FIG.5